# EUROPÄISCHE PATENTSCHRIFT

(11) **EP 1 497 913 B1**
(45) Veröffentlichungstag und Bekanntmachung des Hinweises auf die Patenterteilung: **09.06.2010**
(21) Anmeldenummer: 03709770.6
(22) Anmeldetag: 11.03.2003
(51) Int. Cl.: H02P 7/24, H02M 5/44, H02M 7/797

(54) **UMRICHTERSYSTEM, VERFAHREN UND UMRICHTER**
CONVERTER SYSTEM, METHOD AND CONVERTER
SYSTEME CONVERTISSEUR, PROCEDE ET CONVERTISSEUR

(30) Priorität: 10.04.2002 DE 10215822
(43) Veröffentlichungstag der Anmeldung: 19.01.2005
(73) Patentinhaber: SEW-Eurodrive GmbH & Co, D-76646 Bruchsal (DE)
(72) Erfinder: KNELLER, Klaus, 76698 Ubstadt-Weiher (DE)
(86) Internationale Anmeldenummer: PCT/EP2003/002465
(87) Internationale Veröffentlichungsnummer: WO 2003/085818

(56) Entgegenhaltungen:
- DE-A- 4 423 692
- DE-A- 10 152 487
- DE-C- 4 235 223
- DE-C- 19 849 763

## Beschreibung

Die Erfindung betrifft ein Umrichtersystem, Verfahren und einen Umrichter.

Umrichter zur Versorgung von Elektromotoren sind allgemein bekannt. Dabei wird meist aus einer Netzwechselspannung mittels Gleichrichter eine Zwischenkreisspannung erzeugt, die zur Versorgung eines Wechselrichters vorgesehen ist. Beim generatorischen Betrieb wird die entstehende Energie mittels eines Bremswiderstandes, der von einem Brems-Chopper, also einem elektronischen Leistungsschalter, bestromt wird, verbraucht. Die am Bremswiderstand entstehende Wärme muss abgeführt werden, wofür ein entsprechendes Bauvolumen vorzusehen ist, insbesondere auch für Luftströmung. Für jeden Elektromotor ist außerdem ein Umrichter notwendig, wie im Dokument DE 4235223 erläutert.

Der Erfindung liegt daher die Aufgabe zugrunde, eine Möglichkeit zur kostengünstigen Versorgung mehrerer Elektromotoren aufzuzeigen, wobei die Lösung auch möglichst kompakt ausgeführt sein soll.

Erfindungsgemäß wird die Aufgabe bei dem Umrichtersystem nach den in Anspruch 1 und bei dem Verfahren nach den in Anspruch 29 angegebenen Merkmalen gelöst. Weitere vorteilhafte Ausgestaltungen ergeben sich aus den Unteransprüchen.

Wesentliche Merkmale der Erfindung bei der Adaptervorrichtung sind, dass das Umrichtersystem
- zumindest ein Versorgungsmodul, das eine unipolare Zwischenkreisspannung zur Verfügung stellt,
- ein oder mehrere Antriebsmodule, die von der Zwischenkreisspannung speisbar sind und jeweils zumindest einen Wechselrichter zur Versorgung mindestens eines Elektromotors, insbesondere eines Synchronmotors oder Asynchronmotors, umfassen,
- mindestens ein Puffermodul zur Speicherung von elektrischer Energie
umfasst. Von Vorteil ist dabei, dass das Puffermodul Energie zwischenspeicherbar macht, die von sich im generatorischen Betrieb befindenden Antriebsmodulen erzeugt wird. Insbesondere ist das Puffermodul zeitabschnittsweise, insbesondere bei generatorischem Betrieb mindestens eines Antriebsmoduls, mit Energie speisbar und danach ist gespeicherte Energie vom Puffermodul zumindest an die Antriebsmodule abgebbar. Weiterer Vorteil ist der modulare Aufbau. Denn bei dem Umrichtersystem werden die Module je nach Anwendung zusammen kombiniert und somit die Bauteilevielfalt reduziert gegenüber einem System aus separaten Umrichtern. Sich im generatorischen Betrieb befindende Module und sich im motorischen Betrieb befindende Module sind über den Zwischenkreis verbunden und können also gegenseitig Energie ausgleichen. Außerdem belastet das Puffermodul das Netz nicht, weil dem Kondensator des Puffermoduls nur bei Überschreiten eines ersten kritischen Wertes der Zwischenkreisspannung Strom zugeführt wird, also die Stromzufuhr gesteuert erfolgt.

Bei einer bevorzugten Ausführung umfasst zumindest ein Versorgungsmodul einen Gleichrichter zur Erzeugung von Gleichspannung aus einer Wechselspannung, insbesondere aus einer dreiphasigen Netz-Wechselspannung. Von Vorteil ist dabei, dass das Umrichtersystem aus einem industrieüblichen oder haushaltsüblichen Wechselspannungsnetz versorgbar ist.

Bei einer bevorzugten Ausführung umfasst zumindest ein Versorgungsmodul eine Rückspeisung oder es ist eine Rückspeisung als Modul mit der Zwischenkreisspannung und der Wechselspannung, insbesondere einer dreiphasigen Netz-Wechselspannung, zum Zurückspeisen vom Zwischenkreis ins Netz verbindbar. Von Vorteil ist dabei, dass im generatorischen Betrieb erzeugte Energie, die nicht vom Puffermodul zwischenspeicherbar ist, in das Netz rückspeisbar ist und somit die Energiekosten verringerbar sind.

Bei einer bevorzugten Ausführung umfasst zumindest ein Versorgungsmodul einen elektronischen Leistungsschalter, der von der Zwischenkreisspannung getriebenen Strom auf eine an einem Ausgang des Versorgungsmoduls angeschlossene Vorrichtung durchleitbar oder sperrbar macht, abhängig von der Ansteuerung des elektronischen Leistungsschalters. Von Vorteil ist dabei, dass der elektronische Leistungsschalter zum Steuern des Stromes für einen Bremswiderstand und/oder für ein Puffermodul verwendbar ist und somit zwischenkreisspannungsabhängig Energie an das Puffermodul abgibt.

Bei einer bevorzugten Ausführung ist die Ansteuerung des elektronischen Leistungsschalters mit einem Mittel zur Spannungserfassung der Zwischenkreisspannung verbunden. Von Vorteil ist dabei, dass die Ansteuerung abhängig von der Zwischenkreisspannung ausführbar ist, insbesondere also bei Überschreiten von kritischen Werten ein Schalten oder eine gepulste Betriebsart des Schalters ausführbar ist.

Bei einer bevorzugten Ausführung umfasst das Puffermodul einen Kondensator, dessen Kapazität derart größer ist als die Summe aller, an der Zwischenkreisspannung direkt anliegenden Kondensatoren. Dabei ist zu beachten, dass der Kondensator des Puffermoduls nicht direkt mit dem Zwischenkreis verbunden ist sondern über weitere Mittel, wie beispielsweise Dioden. Von Vorteil ist bei diesem Wert der Kapazität, dass ein Bremswiderstand einsparbar ist, der hohe Temperaturen aufweist und ein großes Bauvolumen, insbesondere zur Kühlung, erfordert. Außerdem wird dann die Energie nicht in Wärme umgewandelt sondern von Kondensatoren des Puffermoduls als elektrische Energieform rückspeisbar an die am Zwischenkreis angeschlossenen Antriebsmodule gehalten. Somit wird der Energieverbrauch vermindert und die Energiekosten werden gesenkt.

Bei einer bevorzugten Ausführung umfasst das Puffermodul einen Kondensator, dessen Kapazität derart dimensioniert vorgesehen ist, dass im motorischen Betrieb bei Nennlast die Zwischenkreisspannung einen weniger als halb so großen Wechselspannungsanteil aufweisen würde, wenn der Kondensator direkt mit dem Zwischenkreis verbunden wäre, als der Wechselspannungsanteil wäre bei nicht derart verbundenem Kondensator. Diese Eigenschaft dient nur der Definition des Wertes der Kapazität des Kondensators. In der erfindungsgemäßen Ausführung ist der Kondensator des Puffermoduls nicht direkt mit dem Zwischenkreis verbunden. Er wird nämlich mit weiteren Mitteln zwischenkreisspannungsabhängig beladen oder entladen. Von Vorteil ist bei dieser Dimensionierung, dass das Puffermodul mit einem Kondensator kleinen Bauvolumens ausführbar ist, relativ gesehen zu der Summe der Bauvolumina der Zwischenkreiskondensatoren der dem Umrichtersystem entsprechenden separaten Umrichter. Insbesondere ist ein kostengünstiger Folienkondensator verwendbar. Somit ist das Bauvolumen des Umrichtersystems insgesamt klein und das Umrichtersystem insgesamt kostengünstig herstellbar, insbesondere bei Verwendung eines Versorgungsmoduls mit Rückspeisung.

Bei einer bevorzugten Ausführung wird ein an einem Ausgang des Versorgungsmoduls angeschlossenes Puffermodul vorgesehen, das einen Kondensator umfasst, dessen Ladestrom zumindest vom elektronischen Leistungsschalter beeinflussbar und/oder steuerbar ist. Von Vorteil ist dabei, dass der Kondensator je nach Anwendung dimensionierbar ist und Energie aus dem Kondensator an Antriebsmodule oder gegebenenfalls an ein eine Netzrückspeisung umfassendes Versorgungsmodul rückspeisbar ist.

Bei einer bevorzugten Ausführung umfasst das Puffermodul PM zumindest einen Elektrolyt-Kondensator. Von Vorteil ist dabei, dass das Puffermodul mit großen Kapazitäten vorsehbar ist.

Wesentliche Merkmale der Erfindung bei dem Umrichtersystem sind, dass zur Bildung des Umrichtersystems
- zumindest ein Versorgungsmodul, das eine unipolare Zwischenkreisspannung zur Verfügung stellt,
- ein oder mehrere Antriebsmodule, die von der Zwischenkreisspannung speisbar sind und jeweils zumindest einen Wechselrichter zur Versorgung mindestens eines Elektromotors, insbesondere eines Synchronmotors oder Asynchronmotors, umfassen,
- und mindestens ein Puffermodul zur Speicherung von elektrischer Energie
über ein Bussystem zumindest elektrisch verbindbar sind, wobei das Bussystem
- zumindest zwei Starkstrom-Leitungen (+,-) zum Führen der Zwischenkreisspannung
- und eine Starkstrom-Leitung BRC zur elektrischen Verbindung des oder der Versorgungsmodule mit dem oder den Puffermodulen
umfasst. Von Vorteil ist dabei, dass das Bussystem derart gestaltbar ist, dass verschiedene Module anschließbar sind und an der Zwischenkreisspannung anliegen zur Entnahme von Energie oder zum Einspeisen von Energie in den Zwischenkreis.

Bei einer bevorzugten Ausführung weisen die Module, wie Puffermodul oder Antriebsmodule, Versorgungsmodul und gegebenenfalls weitere Module, jeweils eine gleichartige Schnittstelle zur elektrischen und mechanischen Verbindung mit dem Bussystem auf. Insbesondere ist die Schnittstelle bei allen Modulen gleichgeartet ausgeführt. Von Vorteil ist dabei, dass ein System geschaffen wird, das hoch flexibel ist und an die jeweiligen Anwendungen angepasst werden kann. Beispielsweise kann ein Rückspeisemodul bei einem bestehenden Umrichtersystem hinzugefügt werden, um Energie einzusparen, oder es kann ein Puffermodul oder ein größeres Puffermodul angeschlossen werden. Außerdem können verschiedene Antriebsmodule angeschlossen werden.

Wesentliche Merkmale der Erfindung bei dem Verfahren sind, dass zum Betrieb eines Puffermoduls bei einem Umrichtersystem, umfassend
- zumindest ein Versorgungsmodul VM, das eine unipolare Zwischenkreisspannung zur Verfügung stellt,
- ein oder mehrere Antriebsmodule AM, die aus der Zwischenkreisspannung speisbar sind und jeweils zumindest einen Wechselrichter zur Versorgung mindestens eines Elektromotors umfassen,
- mindestens ein Puffermodul PM zur Speicherung von elektrischer Energie
wobei
- die Zwischenkreisspannung erfasst wird,
- bei Überschreiten eines ersten kritischen Wertes der Zwischenkreisspannung das Puffermodul PM mit Energie gespeist wird, wenn die generatorische Leistung von ersten Antriebsmodulen insgesamt die motorische Leistung von zweiten Antriebsmodulen übersteigt,
das Puffermodul an die von der Zwischenkreisspannung versorgten Module Energie rückspeist, wenn die motorische Leistung von Antriebsmodulen insgesamt die generatorische Leistung übersteigt. Von Vorteil ist dabei, dass die Zwischenkreisspannung überwacht wird, wobei mehrere Antriebsmodule angeschlossen sind, die sich über den Zwischenkreis Energie übertragen können. Somit ist die Anzahl der Fälle, bei denen die Zwischenkreisspannung einen kritischen Wert übersteigt, reduziert. Außerdem ist auf diese Weise ein einziges Puffermodul für mehrere Antriebsmodule verwendbar, das bei entsprechender Dimensionierung kleiner wählbar ist als die Summe der Kapazitäten der Zwischenkreiskondensatoren entsprechender separater Umrichter. Dies reduziert die Kosten und das Bauvolumen. Darüber hinaus genügt ein einziger Leistungsschalter zum Schalten beziehungsweise ein einziges Erfassen von Zwischenkreisspannung für mehrere Antriebsmodule.

Bei einer bevorzugten Ausführung wird bei Überschreiten eines zweiten kritischen Wertes der Zwischenkreisspannung ein Bremswiderstand bestromt zur Vernichtung von Energie, wenn die generatorische Leistung von ersten Antriebsmodulen insgesamt die motorische Leistung von zweiten Antriebsmodulen übersteigt. Von Vorteil ist dabei, dass das Umrichtersystem bei einem entsprechenden Anwendungsfall auch zusätzlich mit einem einen Bremswiderstand umfassenden Modul ausstattbar ist und somit die Zwischenkreisspannung im zulässigen Bereich haltbar ist. Dabei ist der kritische Wert für das Schalten des Bremswiderstandes verschieden ausführbar vom kritischen Wert für das Schalten des Pufferkondensators. Besonders vorteilhafterweise kann also bei kurzfristigem generatorischem Betrieb Energie im Puffermodul gespeichert werden und bei langfristigem im Bremswiderstand verbraucht werden.

Bei einer anderen bevorzugten Ausführung sind zweiter und erster kritischer Wert identisch. Von Vorteil ist dabei, dass das Verfahren besonders einfach ausführbar ist.

### Bezugszeichenliste

- VM: Versorgungsmodul
- AM: Antriebsmodul
- PM: Puffermodul
- PVM: integriertes Pufferversorgungsmodul
- M: Elektromotor
- BRC: elektrischer Anschlusspunkt

- 1: Gleichrichter
- 2, 23: Mittel zur Spannungserfassung
- 3: Ansteuerung
- 10: Lademittel
- 32: Ansteuerung
- 33: Mittel zur Stromerfassung

- C1: Kondensator
- C2: Kondensator
- C3: Kondensator
- D1, D2, D3: Dioden
- T1, T2: elektronischer Leistungsschalter

Die Erfindung wird nun anhand von Abbildungen näher erläutert:

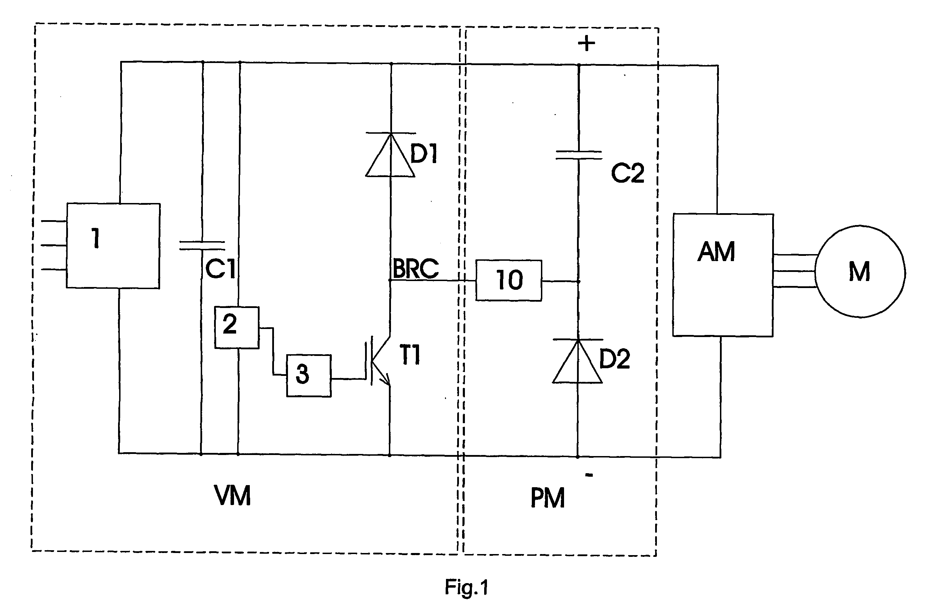

In der Figur 1 ist ein erfindungsgemäßes Umrichtersystem gezeigt, bei dem ein Versorgungsmodul VM einen Gleichrichter 1 umfasst, der aus einer dreiphasigen Netz-Wechselspannung, also Drehspannung, eine Zwischenkreisspannung (Bezugszeichen +, -) erzeugt, wobei ein Kondensator C1 zur Verminderung von elektromagnetischen Störungen vorgesehen ist. Am Kondensator C1 liegt die Zwischenkreisspannung direkt an.

Mittel 2 zur Spannungserfassung sind mit der Ansteuerung 3 eines elektronischen Leistungsschalters T1 verbunden, der somit bei Überschreiten eines kritischen Wertes durch die Zwischenkreisspannung vom sperrenden in den leitenden Zustand versetzbar ist. Der Kondensator C2 ist über diesen elektronischen Leistungsschalter T1 aufladbar.

Mit der Zwischenkreisspannung (+,-) werden auch die Antriebsmodule AM gespeist, die jeweils Wechselrichter zur Versorgung von Elektromotoren, insbesondere Asynchronmotoren oder Synchronmotoren, umfassen. Außerdem sind in den Antriebsmodulen AM auch elektronische Schaltungen integriert, die zur Ausführung von Steuer- und/oder Regelverfahren dienen. Die Antriebsmodule AM ähneln also im Wesentlichen Umrichtern, ausgenommen Gleichrichtung und Zwischenkreiskondensator C1. Außerdem ist auch das Puffermodul und gegebenenfalls weitere Module, wie Rückspeisungsmodul oder ein einen Bremswiderstand umfassendes Modul, nicht im Antriebsmodul.

Über das Lademittel 10, das in einem ersten erfindungsgemäßen Ausführungsbeispiel als elektrischer Widerstand ausführbar ist, wird der Kondensator C2 geladen und somit der maximale Ladestrom begrenzt.

Bei anderen erfindungsgemäßen Ausführungsbeispielen werden als Lademittel 10 induktive Elemente oder Kombinationen von induktiven Elementen mit elektrischen Widerständen vorgesehen.

Die Kapazität des Kondensators C1 ist derart klein gewählt, dass im motorischen Nennbetrieb und bei abgetrenntem Puffermodul der Wechselanteil der Zwischenkreisspannung im Wesentlichen dem Wechselanteil gleicht, der vorhanden wäre, wenn der Kondensators C1 nicht vorhanden wäre. Der Kondensator C1 ist nicht als Elektrolytkondensator ausgeführt, sondern beispielsweise als Folienkondensator ausführbar. Auch bei angeschlossenem Puffermodul im Nennbetrieb ändert sich am Wechselanteil der Zwischenkreisspannung im Wesentlichen nichts, solange alle Antriebsmodule im motorischen Betrieb sind. Erst wenn infolge eines generatorischen Betriebs die Zwischenkreisspannung einen ersten kritischen Wert übersteigt, wird das Puffermodul mit Energie geladen und diese nach Beenden des generatorischen Betriebs in den Zwischenkreis zurückgespeist. Bei einem industrieüblichen 400V-Drehspannungsnetz liegt dieser Wert über 600 V, beispielsweise vorteiligerweise bei 800 V oder mehr.

Der Kondensator C2 ist als Elektrolytkondensator ausgeführt. Seine Kapazität ist derart groß, dass bei Ersetzung des Kondensators C1 durch C2 eine derartige Glättung der Zwischenkreisspannung vorhanden wäre, dass der Wechselanteil weniger als halb so groß wäre wie im vorgenannten Fall. Dieses direkte Verbinden mit dem Zwischenkreis würde allerdings das Netz belasten, da bei ungeladenem Kondensator große Ladeströme entstehen. Insbesondere wäre dann auch eine Begrenzung des Ladestroms erforderlich, beispielsweise mit einem Ladewiderstand. Bei dem vorliegenden erfindungsgemäßen Ausführungsbeispiel ist der Kondensator C2 nicht direkt mit der Zwischenkreisspannung sondern nur indirekt über weitere Mittel verbunden, wie über die Lademittel 10 und den elektronischen Leistungsschalter. Bei anderen erfindungsgemäßen Ausführungsformen ist der Kondensator C2 mittels anderer oder weiterer Mittel mit der Zwischenkreisspannung verbunden, aber nie direkt.

Bei dem Ausführungsbeispiel nach Figur 1 wird der Kondensator im generatorischen Betrieb mit Energie gespeist, wenn die Zwischenkreisspannung einen kritischen Wert überschritten hat. Bei Anschluss von mehreren Antriebsmodulen gibt es Betriebszustände, bei denen ein Teil der Antriebsmodule generatorisch und ein anderer Teil motorisch betrieben wird. Wesentlich ist dann selbstverständlich, ob insgesamt Energie an den Zwischenkreis zugeführt wird, also die Zwischenkreisspannung sich erhöht, oder Energie dem Zwischenkreis entnommen wird.

In der Figur 1 ist der elektrische Anschlusspunkt mit Bezugszeichen BRC gekennzeichnet. An diesem wird das Puffermodul PM mit den Lademitteln 10 angeschlossen.

Die Diode D1 hat Schutzfunktion für die Bauelemente, insbesondere den elektronischen Leistungsschalter T1, wobei die Diode D1 als Freilaufdiode für die Lademittel 10 wirkt. Die Diode D2 ermöglicht das Abgeben der gespeicherten Energie vom Kondensator C2 an den Zwischenkreis beim Entladen, indem Strom über die Diode D2 fließt.

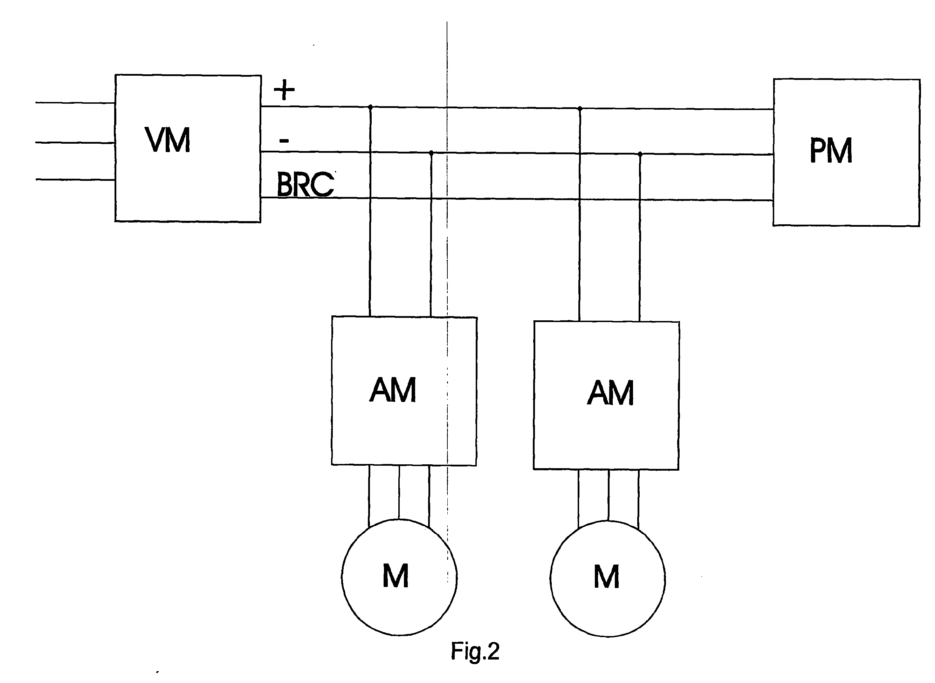

In der Figur 2 ist ein erfindungsgemäßes Umrichtersystem mit zwei Antriebsmodulen gezeigt. Der Zwischenkreis, umfassend die beiden Leitungen + und - für die Zwischenkreisspannung und die Leitung BRC zur Durchleitung von Pufferstrom an das Puffermodul, ist als Bussystem ausgeführt, an das die Antriebsmodule mit ihrer jeweiligen Schnittstelle angeschlossen sind.

Zur Bildung des Umrichtersystems sind also
- zumindest ein Versorgungsmodul VM, das eine unipolare Zwischenkreisspannung zur Verfügung stellt,
- ein oder mehrere Antriebsmodule AM, die von der Zwischenkreisspannung speisbar sind und jeweils zumindest einen Wechselrichter zur Versorgung mindestens eines Elektromotors, insbesondere eines Synchronmotors oder Asynchronmotors, umfassen,
- und mindestens ein Puffermodul PM zur Speicherung von Energie
über das Bussystem elektrisch und mechanisch verbindbar sind, wobei das Bussystem
- zumindest zwei Starkstrom-Leitungen (+,-) zum Führen der Zwischenkreisspannung
- und eine Starkstrom-Leitung BRC zur elektrischen Verbindung des oder der Versorgungsmodule mit dem oder den Puffermodulen
umfasst. Dabei ist das Bussystem vorteilhaft als Verschienungssystem ausführbar, in das die Module einsteckbar sind. Dazu weisen die Module, wie Puffermodul PM oder Puffermodule, Antriebsmodule AM, Versorgungsmodul VM und gegebenenfalls weitere Module, jeweils eine Schnittstelle zur elektrischen und mechanischen Verbindung mit dem Bussystem auf. Insbesondere ist diese Schnittstelle bei allen Modulen gleichgeartet ausgeführt. Statt eines Verschienungssystems sind auch gleichwirkende Bussysteme verwendbar. Wesentlich vorteilhaft ist aber ein Bussystem verwendbar, das zur Aufnahme der genannten jeweils gleichartig ausgeprägten Schnittstelle an verschiedenen diskreten Positionen oder sogar unendlich vielen Positionen geeignet ausgeführt ist.

Das Versorgungsmodul kann bei einem weiteren erfindungsgemäßen Ausführungsbeispiel eine Netzrückspeisung umfassen. Bei einem anderen erfindungsgemäßen Ausführungsbeispiel kann die Netzrückspeisung auch als eigenständiges Modul ausgeführt werden mit wiederum einer gleichartigen Schnittstelle zur Verbindung mit dem Bussystem.

Insbesondere das erfindungsgemäße Verfahren der zwischenkreisspannungsabhängigen Zuleitung von Energie aus dem Zwischenkreis an einen Kondensator mit großer Kapazität, ist auch mit einem einzelnen Umrichter vorteilhaft realisierbar.

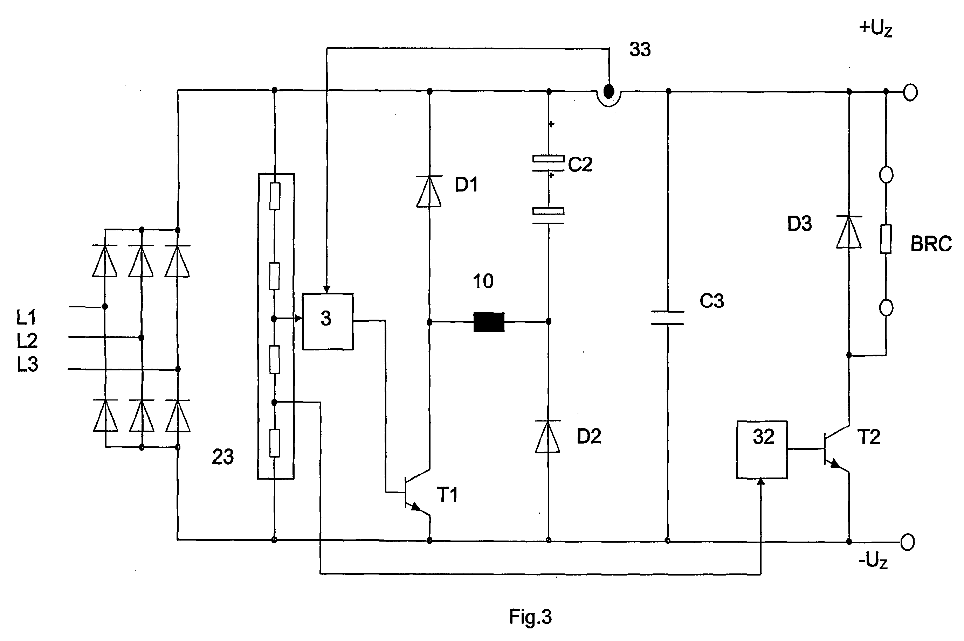

In der Figur 3 ist ein integriertes Pufferversorgungsmodul PVM gezeigt, bei welchem dieses Eigenschaften des Versorgungsmoduls VM und des Puffermoduls PM umfasst. Darüber hinaus sind bei dieser Integration noch weitere vorteilhafte Eigenschaften verwirklicht:

Die Mittel zur Spannungserfassung 23 der Zwischenkreisspannnung und Mittel zur Erfassung des Zwischenkreisstromes 33 sind mit der Ansteuerung 3 für den elektronischen Leistungsschalter T1 verbunden. Somit ist auch der Zwischenkreisstrom beim Ansteuern des elektronischen Leistungsschalters T1 berücksichtigbar. Insbesondere ist aus diesen Messwerten für Zwischenkreisspannung und Zwischenkreisstrom ein Wert für die Belastung des elektronischen Leistungsschalters T1 ermittelbar und dieser somit vor Überbelastung schützbar. Daraus ergibt sich weiter vorteilhafterweise, dass die Induktivität 10 kleiner auslegbar ist, weil die maximal zu erwartenden Ströme für die Induktivität 10 vom Schalter T1 mitbestimmbar sind.

Die Bestimmung des Zwischenkreisstromes wird auch noch für einen weiteren Zweck verwendet, nämlich für den Überlastschutz des Pufferversorgungsmoduls PVM, insbesondere also für das Versorgungsmodulteil und die Pufferaufladung.

Der Kondensator C3 ist als Zwischenkreiskondensator ausgeführt. Insbesondere ist er in weiteren erfindungsgemäßen Ausführungsbeispielen als kostengünstiger Folienkondensator und nicht als Elektrolytkondensator ausführbar.

Beim generatorischen Betrieb steigt die Zwischenkreisspannung an bis der Spannungs-Schwellwert der Ansteuerung 3 erreicht wird. Bei Überschreiten dieses Wertes wird dann der elektronische Leistungsschalter von der Ansteuerung 3 in den leitenden Zustand versetzt. Somit fließt der Strom zum Aufladen des Kondensators C2 über die Induktivität 10 und wird mit den Mitteln zur Zwischenkreis-Stromerfassung 33 erfasst. Erreicht der auf diese Weise bestimmte Stromwert einen kritischen Wert, wird der elektronische Leistungsschalter T1 abgeschaltet. Der Ladestrom für den Kondensator C2 fließt dann noch so lange über die Induktivität 10 und die Freilaufdiode D1 weiter, bis die Energie der Spule im Wesentlichen an den Kondensator übergegangen ist. Während des beschriebenen Ladezyklus bis zum Abschalten des elektronischen Leistungsschalters T1 sinkt die Zwischenkreisspannung etwas ab. Nach diesem Abschaltzeitpunkt steigt sie wieder an und der beschriebene Ladezyklus wird wiederholt.

Die Mittel zur Spannungserfassung 23 liefern einen zweiten, weiter heruntergeteilten, von der Zwischenkreisspannung abhängigen Wert, der der Ansteuerung 32 des elektronischen Leistungsschalters T2 zugeführt wird. Die Ansteuerungen 3 und 32 weisen dieselbe Spannungs-Schwellwerte an ihrem Eingang auf, von denen abhängig die elektronischen Leistungsschalter T1 und T2 angesteuert werden. Somit ist in einfacher Weise ermöglicht, dass zuerst der Pufferkondensator aufgeladen wird, also der Kondensator C2, und dann erst bei weiter angestiegener Zwischenkreisspannung der elektronische Leistungsschalter derart leitend geschaltet wird, dass durch den Bremswiderstand BRC Zwischenkreisstrom abgeführt wird. Somit ist abhängig von der Zwischenkreisspannung der an äußere Klemmen BRC angeschlossene Bremswiderstand mit Energie versorgbar. Dem Bremswiderstand BRC ist eine Freilaufdiode D3 parallel geschaltet, da somit auch Bremswiderstände mit Zuleitungen einsetzbar sind, die nicht nur ohmsche sondern auch induktive Anteile aufweisen.

In weiteren erfindungsgemäßen Ausführungsbeispielen ist das Pufferversorgungsmodul PVM derart ausgeführt, dass die Klemmen BRC integriert sind und der Bremswiderstand ebenfalls im Inneren des Pufferversorgungsmoduls PVM angeordnet ist.

## Patentansprüche

1. Umrichtersystem, umfassend
- zumindest ein Versorgungsmodul (VM), das eine unipolare Zwischenkreisspannung zur Verfügung stellt,
- mehrere Antriebsmodule (AM), die von der Zwischenkreisspannung gespeist werden und jeweils zumindest einen Wechselrichter zur Versorgung mindestens eines Elektromotors, insbesondere eines Synchronmotors oder Asynchronmotors, umfassen,
- mindestens ein Puffermodul (PM) zur Zwischenspeicherung von elektrischer Energie aus den Antriebsmodulen (AM), wobei das Puffermodul (PM) mit dem Zwischenkreis verbunden ist und einen Kondensator (C2) aufweist, der nicht direkt mit dem Zwischenkreis verbunden ist,
**dadurch gekennzeichnet, dass**
- Mittel (2, 23) zur Erfassung der Zwischenkreisspannung verschaltet sind, und
- ein Leistungsschalter (T1) verschaltet ist, der bei Überschreiten eines ersten kritischen Wertes der Zwischenkreisspannung das Puffermodul (PM) zuschaltet und seine Speisung mit Energie ermöglicht, wenn die generatorische Leistung von ersten Antriebsmodulen insgesamt die motorische Leistung von zweiten Antriebsmodulen übersteigt, wobei das Puffermodul (PM) an die von der Zwischenkreisspannung versorgten Module Energie rückspeist, wenn die motorische Leistung von Antriebsmodulen insgesamt die generatorische Leistung übersteigt.

2. Umrichtersystem nach Anspruch 1
**dadurch gekennzeichnet, dass**
zur Bildung des Umrichtersystems das Versorgungsmodul (VM), die Antriebsmodule (AM), und das Puffermodul (PM) zur Speicherung von Energie über ein Bussystem zumindest elektrisch verbindbar sind, wobei das Bussystem
- zumindest zwei Starkstrom-Leitungen (+,-) zum Führen der Zwischenkreisspannung
- und eine Starkstrom-Leitung (BRC) zur elektrischen Verbindung des Versorgungsmoduls (VM) mit dem Puffermodul (PM)
umfasst.

3. Umrichtersystem nach mindestens einem der vorangegangenen Ansprüche,
**dadurch gekennzeichnet, dass**
die Stromzufuhr zum Puffermodul (PM) derart gesteuert erfolgt, dass nur bei Überschreiten eines ersten kritischen Wertes der Zwischenkreisspannung Strom zugeführt wird.

4. Umrichtersystem nach mindestens einem der vorangegangenen Ansprüche,
**dadurch gekennzeichnet, dass**
das Puffermodul zeitabschnittsweise, insbesondere im generatorischen Betrieb mindestens eines Antriebsmoduls, mit Energie speisbar ist und danach gespeicherte Energie zumindest an die Antriebsmodule abgebbar ist.

5. Umrichtersystem nach mindestens einem der vorangegangenen Ansprüche,
**dadurch gekennzeichnet, dass**
zumindest ein Versorgungsmodul (VM) einen Gleichrichter (1) zur Erzeugung von Gleichspannung aus einer Wechselspannung, insbesondere aus einer dreiphasigen Netz-Wechselspannung, umfasst.

6. Umrichtersystem nach mindestens einem der vorangegangenen Ansprüche,
**dadurch gekennzeichnet, dass**
zumindest ein Versorgungsmodul (VM) eine Rückspeisung umfasst oder eine Rückspeisung mit der Zwischenkreisspannung und der Wechselspannung, insbesondere einer dreiphasigen Netz-Wechselspannung, verbindbar ist.

7. Umrichtersystem nach mindestens einem der vorangegangenen Ansprüche,
**dadurch gekennzeichnet, dass**
zumindest ein Versorgungsmodul (VM) einen elektronischen Leistungsschalter (T1) umfasst, der von der Zwischenkreisspannung getriebenen Strom auf eine an einem Ausgang (BRC) des Versorgungsmoduls angeschlossene Vorrichtung durchleitbar oder sperrbar macht, abhängig von der Ansteuerung (3) des elektronischen Leistungsschalters (T1)

8. Umrichtersystem nach mindestens einem der vorangegangenen Ansprüche,
**dadurch gekennzeichnet, dass**
die Ansteuerung (3) des elektronischen Leistungsschalters (T1) mit einem Mittel (2) zur Spannungserfassung der Zwischenkreisspannung verbunden ist.

9. Umrichtersystem nach mindestens einem der vorangegangenen Ansprüche,
**dadurch gekennzeichnet, dass**
das Puffermodul (PM) einen Kondensator umfasst, dessen Kapazität größer ist als die Summe aller an der Zwischenkreisspannung direkt anliegenden Kondensatoren.

10. Umrichtersystem nach mindestens einem der vorangegangenen Ansprüche,
**dadurch gekennzeichnet, dass**
die am Zwischenkreis direkt anliegende Kapazität des Versorgungsmoduls (VM) und ein vom Puffermodul (PM) umfasster Kondensator derart dimensioniert vorgesehen sind, dass im motorischen Betrieb bei Nennlast die Zwischenkreisspannung einen weniger als halb so großen Wechselspannungsanteil aufweisen würde, wenn der Kondensator des Puffermoduls (PM) direkt am Zwischenkreis angeschlossen wäre, als der Wechselspannungsanteil bei samt Kondensator entferntem Puffermodul (PM) ist.

11. Umrichtersystem nach mindestens einem der vorangegangenen Ansprüche,
**dadurch gekennzeichnet, dass**
als eine an einem Ausgang (BRC) des Versorgungsmoduls (VM) angeschlossene Vorrichtung das Puffermodul (PM) einen Kondensator umfasst, dessen Ladestrom zumindest vom elektronischen Leistungsschalter (T1) beeinflussbar und/oder steuerbar ist.

12. Umrichtersystem nach mindestens einem der vorangegangenen Ansprüche,
**dadurch gekennzeichnet, dass**
das Puffermodul (PM) zumindest einen Elektrolyt-Kondensator umfasst.

13. Umrichtersystem nach mindestens einem der vorangegangenen Ansprüche,
**dadurch gekennzeichnet, dass**
das Puffermodul (PM) einen Kondensator (C2) umfasst, dessen Kapazität größer ist als die Summe aller an der Zwischenkreisspannung direkt anliegenden Kondensatoren

14. Umrichtersystem nach mindestens einem der vorangegangenen Ansprüche,
**dadurch gekennzeichnet, dass**
die am Zwischenkreis direkt anliegende Kapazität des Versorgungsmoduls (VM) und ein vom Puffermodul (PM) umfasster Kondensator derart dimensioniert vorgesehen sind, dass im motorischen Betrieb bei Nennlast die Zwischenkreisspannung einen weniger als halb so großen Wechselspannungsanteil aufweisen würde, wenn der Kondensator des Puffermoduls direkt am Zwischenkreis direkt am Zwischenkreis angeschlossen wäre, als der Wechselspannungsanteil bei samt Kondensator entferntem Puffermodul ist.

15. Umrichtersystem nach mindestens einem der vorangegangenen Ansprüche,
**dadurch gekennzeichnet, dass**
das Puffermodul (PM) und das Versorgungsmodul (VM) jeweils separat derart ausgeführt sind, dass sie jeweils ein eigenes Gehäuse aufweisen.

16. Umrichtersystem nach mindestens einem der Ansprüche 1 bis 14,
**dadurch gekennzeichnet, dass**
das Puffermodul (PM) und das Versorgungsmodul (VM) integriert als Pufferversorgungsmodul (PVM) und in einem einzigen Gehäuse ausgeführt sind.

17. Umrichtersystem nach Anspruch 16,
**dadurch gekennzeichnet, dass**
das Pufferversorgungsmodul (PVM) einen elektronischen Leistungsschalter (T1) umfasst, der von der Zwischenkreisspannung getriebenen Strom auf eine Vorrichtung durchleitbar oder sperrbar macht, abhängig von der Ansteuerung (3) des elektronischen Leistungsschalters (T1)

18. Umrichtersystem nach Anspruch 16 oder 17,
**dadurch gekennzeichnet, dass**
die Ansteuerung (3) des elektronischen Leistungsschalters (T1) mit einem ersten Mittel (2) zur Spannungserfassung der Zwischenkreisspannung verbunden ist.

19. Umrichtersystem nach mindestens einem der Ansprüche 16 bis 18,
**dadurch gekennzeichnet, dass**
die Ansteuerung (3) des elektronischen Leistungsschalters (T1) mit einem Mittel (33) zur Erfassung des Zwischenkreisstromes verbunden ist.

20. Umrichtersystem nach mindestens einem der Ansprüche 16 bis 19,
**dadurch gekennzeichnet, dass**
die Vorrichtung das Puffermodul **(PVM)** einen Kondensator umfasst, dessen Ladestrom zumindest vom elektronischen Leistungsschalter (T1) beeinflussbar und/oder steuerbar ist.

21. Umrichtersystem nach mindestens einem der Ansprüche 16 bis 20,
**dadurch gekennzeichnet, dass**
das Puffermodul **(PVM)** zumindest einen Elektrolyt-Kondensator umfasst.

22. Umrichtersystem nach mindestens einem der Ansprüche 16 bis 21,
**dadurch gekennzeichnet, dass**
das Puffermodul **(PVM)** einen zweiten elektronischen Leistungsschalter (T2) und eine zugehörige Ansteuerung (32) umfasst, die mindestens mit zweiten Mitteln zur Spannungserfassung (23) verbunden ist und wobei mittels des zweiten elektronischen Leistungsschalters (T2) die Stromzufuhr an einen Bremswiderstand beeinflussbar ist.

23. Umrichtersystem nach mindestens einem der Ansprüche 16 bis 22,
**dadurch gekennzeichnet, dass**
erstes Mittel zur Spannungserfassung (2) und zweites Mittel zur Spannungserfassung (23) über einen Spannungsteiler mit dem Zwischenkreis verbunden sind,
wobei die mit dem zweiten Mittel zur Spannungserfassung (23) erfasste Spannung gegenüber der mit dem ersten Mittel zur Spannungserfassung (2) erfassten Spannung heruntergeteilt ist.

24. Umrichtersystem nach mindestens einem der Ansprüche 16 bis 23,
**dadurch gekennzeichnet, dass**
die zu erstem Mittel zur Spannungserfassung (2) gehörige Ansteuerung (3) und die zu zweitem Mittel zur Spannungserfassung (23) zugehörige Ansteuerung (32) dieselben Spannungs-Schwellwerte an ihrem Eingang aufweisen, von denen abhängig die elektronischen Leistungsschalter (T1, T2) ansteuerbar sind.

25. Umrichtersystem nach mindestens einem der vorangegangenen Ansprüche,
**dadurch gekennzeichnet, dass**
die Module, wie Puffermodule (PM), Antriebsmodule (AM), Versorgungsmodule (VM) und gegebenenfalls weitere Module, jeweils eine Schnittstelle zur elektrischen und mechanischen Verbindung mit dem Bussystem aufweisen.

26. Umrichtersystem nach mindestens einem der vorangegangenen Ansprüche,
**dadurch gekennzeichnet, dass**
die Schnittstelle bei allen Modulen gleichgeartet ausgeführt ist.

27. Umrichtersystem nach mindestens einem der vorangegangenen Ansprüche,
**dadurch gekennzeichnet, dass**
das Bussystem als Verschienungssystem ausgeführt ist, in das die Module einsteckbar sind.

28. Umrichtersystem nach mindestens einem der vorangegangenen Ansprüche,
**dadurch gekennzeichnet, dass**
die Antriebsmodule keine Mittel zur Gleichrichtung aufweisen.

29. Verfahren zum Betrieb eines Puffermoduls bei einem Umrichtersystem, umfassend
- zumindest ein Versorgungsmodul (VM), das eine unipolare Zwischenkreisspannung zur Verfügung stellt,
- ein oder mehrere Antriebsmodule (AM), die aus der Zwischenkreisspannung speisbar sind und jeweils zumindest einen Wechselrichter zur Versorgung mindestens eines Elektromotors umfassen,
- mindestens ein Puffermodul (PM) zur Speicherung von elektrischer Energie, wobei das Puffermodul (PM) einen Kondensator (C2) aufweist, der nicht direkt mit dem Zwischenkreis verbunden ist,
**dadurch gekennzeichnet, dass**
- die Zwischenkreisspannung erfasst wird,
- bei Überschreiten eines ersten kritischen Wertes der Zwischenkreisspannung das Puffermodul (PM) durch einen Leistungsschalter zugeschaltet wird und mit Energie gespeist wird, wenn die generatorische Leistung von ersten Antriebsmodulen insgesamt die motorische Leistung von zweiten Antriebsmodulen übersteigt,
- das Puffermodul an die von der Zwischenkreisspannung versorgten Module Energie rückspeist, wenn die motorische Leistung von Antriebsmodulen insgesamt die generatorische Leistung übersteigt

30. Verfahren nach Anspruch 29,
**dadurch gekennzeichnet, dass**
bei Überschreiten eines zweiten kritischen Wertes der Zwischenkreisspannung ein Bremswiderstand bestromt wird zur Vernichtung von Energie, wenn die generatorische Leistung von ersten Antriebsmodulen insgesamt die motorische Leistung von zweiten Antriebsmodulen übersteigt.

31. Verfahren nach Anspruch 29 oder 30,
**dadurch gekennzeichnet, dass**
zweiter und erster kritischer Wert identisch sind.

## Claims

1. Converter system, comprising
- at least one supply module (VM), which provides a unipolar, intermediate circuit voltage,
- a plurality of drive modules (AM), which are powered by the intermediate circuit voltage and each include at least one inverter for powering at least one electric motor, in particular a synchronous motor or an asynchronous motor,
- at least one buffer module (PM) for temporary storage of electrical energy from the drive modules (AM), the buffer module (PM) being connected to the intermediate circuit and having a capacitor (C2) which is not directly connected to the intermediate circuit,
**characterised in that**
- means (2, 23) for measuring the intermediate circuit voltage are connected to the system, and
- a circuit breaker (T1) is connected to the system, which, when the intermediate circuit voltage exceeds a first critical value, connects the buffer module (PM) and enables it to be supplied with energy when the total generative power of first drive modules exceeds the motive power of second drive modules, the buffer module (PM) feeding back energy to the modules powered by the intermediate circuit voltage when the total motive power of drive modules exceeds the generative power.

2. Converter system according to Claim 1,
**characterised in that**, to form the converter system, the supply module (VM), the drive modules (AM), and the buffer module (PM) for storing energy are at least electrically connectible via a bus system, the bus system including
- at least two power lines (+,-) for carrying the intermediate circuit voltage
- and a power line (BRC) for electrically connecting the supply module (VM) to the buffer module (PM).

3. Converter system according to at least one of the preceding claims,
**characterised in that**
the current supply to the buffer module (PM) takes place in a controlled manner such that current is supplied only when a first critical value of the intermediate circuit voltage is exceeded.

4. Converter system according to at least one of the preceding claims,
**characterised in that**
the buffer module can be supplied with energy for periods of time, in particular during generative operation of at least one drive module, and subsequently deliver stored energy at least to the drive modules.

5. Converter system according to at least one of the preceding claims,
**characterised in that**
at least one supply module (VM) includes a rectifier (1) for generating d.c. voltage from an a.c. voltage, in particular from a three-phase a.c. network voltage.

6. Converter system according to at least one of the preceding claims,
**characterised in that**
at least one supply module (VM) includes a feedback or a feedback can be connected to the intermediate circuit voltage and the a.c. voltage, in particular a three-phase a.c. network voltage.

7. Converter system according to at least one of the preceding claims,
**characterised in that**
at least one supply module (VM) includes an electronic circuit breaker (T1) which allows passage of or blocks current, driven by the intermediate circuit voltage, to a device connected to an output (BRC) of the supply module, as a function of the drive (3) of the electronic circuit breaker (T2).

8. Converter system according to at least one of the preceding claims,
**characterised in that**
the drive (3) of the electronic circuit breaker (T1) is connected to a means (2) for measuring the intermediate circuit voltage.

9. Converter system according to at least one of the preceding claims,
**characterised in that**
the buffer module (PM) includes a capacitor, the capacitance of which is greater than the sum of all the capacitors to which the intermediate circuit voltage is directly applied.

10. Converter system according to at least one of the preceding claims,
**characterised in that**
provision is made for the capacitance of the supply module (VM) directly applied to the intermediate circuit and a capacitor included in the buffer module (PM) to be dimensioned in such a way that during motive operation at nominal load, if the capacitor of the buffer module (PM) were directly connected to the intermediate circuit, the a.c. voltage component of the intermediate circuit voltage would be less than half the a.c. voltage component with the buffer module (PM) removed together with the capacitor.

11. Converter system according to at least one of the preceding claims,
**characterised in that**
the buffer module (PM), as a device connected to an output (BRC) of the supply module (VM), includes a capacitor, the charging current of which can be influenced and/or controlled by at least the electronic circuit breaker (T1).

12. Converter system according to at least one of the preceding claims,
**characterised in that**
the buffer module (PM) includes at least one electrolytic capacitor.

13. Converter system according to at least one of the preceding claims,
**characterised in that**
the buffer module (PM) includes a capacitor (C2), the capacitance of which is greater than the sum of all the capacitors to which the intermediate circuit voltage is directly applied.

14. Converter system according to at least one of the preceding claims,
**characterised in that**
provision is made for the capacitance of the supply module (VM) directly applied to the intermediate circuit and a capacitor included in the buffer module (PM) to be dimensioned in such a way that during motive operation at nominal load, if the capacitor of the buffer module were directly connected to the intermediate circuit, the a.c. voltage component of the intermediate circuit voltage would be less than half the a.c. voltage component with the buffer module removed together with the capacitor.

15. Converter system according to at least one of the preceding claims,
**characterised in that**
the buffer module (PM) and the supply module (VM) are each designed separately, so that they each have their own housing.

16. Converter system according to at least one of Claims 1 to 14,
**characterised in that**
the buffer module (PM) and the supply module (VM) are designed so that they are integrated as a buffer/supply module (PVM) in a single housing.

17. Converter system according to Claim 16,
**characterised in that**
the buffer/supply module (PVM) includes an electronic circuit breaker (T1) which allows passage of or blocks current, driven by the intermediate circuit voltage, to a device, as a function of the drive (3) of the electronic circuit breaker (T1).

18. Converter system according to Claim 16 or 17,
**characterised in that**
the drive (3) of the electronic circuit breaker (T1) is connected to a first means (2) for measuring the intermediate circuit voltage.

19. Converter system according to at least one of Claims 16 to 18,
**characterised in that**
the drive (3) of the electronic circuit breaker (T1) is connected to a means (33) for measuring the intermediate circuit current.

20. Converter system according to at least one of Claims 16 to 19,
**characterised in that**
the device [sic] the buffer module (PVM) includes a capacitor, the charging current of which can be influenced and/or controlled by at least the electronic circuit breaker (T1).

21. Converter system according to at least one of Claims 16 to 20,
**characterised in that**
the buffer module (PVM) includes at least one electrolytic capacitor.

22. Converter system according to at least one of Claims 16 to 21,
**characterised in that**
the buffer module (PVM) includes a second electronic circuit breaker (T2) and an associated drive (32) at least connected to second means for measuring voltage (23), the second electronic circuit breaker (T2) being able to influence the supply of current to a braking resistor.

23. Converter system according to at least one of Claims 16 to 22,
**characterised in that**
first means for measuring voltage (2) and second means for measuring voltage (23) are connected to the intermediate circuit via a voltage divider,
the voltage measured by the second means for measuring voltage (23) being reduced compared with the voltage measured by the first means for measuring voltage (2).

24. Converter system according to at least one of Claims 16 to 23,
**characterised in that,**
at their inputs, the drive (3) associated with first means for measuring voltage (2) and the drive (32) associated with second means for measuring voltage (23) have the same threshold voltage values, as a function of which the electronic circuit breakers (T1, T2) can be driven.

25. Converter system according to at least one of the preceding claims,
**characterised in that**
the modules, such as buffer modules (PM), drive modules (AM), supply modules (VM) and, if applicable, further modules, each have an interface for electrical and mechanical connection to the bus system.

26. Converter system according to at least one of the preceding claims,
**characterised in that**
the interface is designed in the same manner in all of the modules.

27. Converter system according to at least one of the preceding claims,
**characterised in that**
the bus system is designed as a rail system, into which the modules are insertable.

28. Converter system according to at least one of the preceding claims,
**characterised in that**
the drive modules have no means for rectification.

29. Method for operating a buffer module in a converter system, comprising
- at least one supply module (VM), which provides a unipolar, intermediate circuit voltage,
- one or more drive modules (AM), which can be powered from the intermediate circuit voltage and each include at least one inverter for powering at least one electric motor,
- at least one buffer module (PM) for storing electrical energy, the buffer module (PM) having a capacitor (C2) which is not directly connected to the intermediate circuit,
**characterised in that**
- the intermediate circuit voltage is measured,
- when the intermediate circuit voltage exceeds a first critical value, the buffer module (PM) is connected by a circuit breaker and is supplied with energy when the total generative power of first drive modules exceeds the motive power of second drive modules,
- the buffer module feeds back energy to the modules powered by the intermediate circuit voltage when the total motive power of drive modules exceeds the generative power.

30. Method according to Claim 29,
**characterised in that,**
when the intermediate circuit voltage exceeds a second critical value, current is supplied to a braking resistor to dissipate energy when the total generative power of first drive modules exceeds the motive power of second drive modules.

31. Method according to Claim 29 or 30,
**characterised in that**
the second and first critical value are identical.

## Revendications

1. Système de convertisseur, comprenant
- au moins un module d'alimentation (VM) qui met à disposition une tension de circuit intermédiaire unipolaire,
- plusieurs modules d'entraînement (AM) qui sont alimentés par la tension de circuit intermédiaire et comprennent chacun au moins un onduleur destiné à alimenter au moins un moteur électrique, en particulier un moteur synchrone ou un moteur asynchrone,
- au moins un module tampon (PM) pour le stockage intermédiaire d'une énergie électrique provenant des modules d'entraînement (AM), le module tampon (PM) étant relié au circuit intermédiaire et présentant un condensateur (C2) qui n'est pas directement relié au circuit intermédiaire,
**caractérisé en ce que**
- des moyens (2, 23) pour détecter la tension de circuit intermédiaire sont connectés, et
- un commutateur de puissance (T1) est connecté, qui, en cas de dépassement d'une première valeur critique de la tension de circuit intermédiaire met en circuit le module tampon (PM) et permet son alimentation en énergie si la puissance en mode générateur de premiers modules d'entraînement dépasse au total la puissance en mode moteur de deuxièmes modules d'entraînement, le module tampon (PM) renvoyant de l'énergie aux modules alimentés par la tension de circuit intermédiaire si la puissance en mode moteur de modules d'entraînement dépasse au total la puissance en mode générateur.

2. Système de convertisseur selon la revendication 1,
**caractérisé en ce que**
pour former le système convertisseur, le module d'alimentation (VM), les modules d'entraînement (AM) et le module tampon (PM) servant à stocker de l'énergie peuvent être reliés au moins électriquement via un système de bus, lequel système de bus comprend
- au moins deux lignes à courant fort (+, -) pour conduire la tension de circuit intermédiaire
- et une ligne à courant fort (BRC) pour relier électriquement le module d'alimentation (VM) au module tampon (PM).

3. Système de convertisseur selon au moins une des revendications précédentes,
**caractérisé en ce que**
l'amenée de courant au module tampon (PM) a lieu de manière commandée de telle sorte que du courant n'est amené qu'en cas de dépassement d'une première valeur critique de la tension de circuit intermédiaire.

4. Système de convertisseur selon au moins une des revendications précédentes,
**caractérisé en ce que**
le module tampon peut, par intervalles de temps, en particulier en mode générateur d'au moins un module d'entraînement, être alimenté en énergie et ensuite fournir l'énergie stockée au moins aux modules d'entraînement.

5. Système de convertisseur selon au moins une des revendications précédentes,
**caractérisé en ce que**
au moins un module d'alimentation (VM) comprend un redresseur (1) pour générer une tension continue à partir d'une tension alternative, en particulier à partir d'une tension alternative d'un réseau triphasé.

6. Système de convertisseur selon au moins une des revendications précédentes,
**caractérisé en ce que**
au moins un module d'alimentation (VM) comprend un retour d'alimentation ou qu'un retour d'alimentation peut être relié à la tension de circuit intermédiaire et à la tension alternative, en particulier à une tension alternative d'un réseau triphasé.

7. Système de convertisseur selon au moins une des revendications précédentes,
**caractérisé en ce que**
au moins un module d'alimentation (VM) comprend un commutateur de puissance électronique (T1) qui laisse passer ou bloque le courant produit par la tension de circuit intermédiaire vers un dispositif connecté à une sortie (BRC) du module d'alimentation en fonction de la commande (3) du commutateur de puissance électronique (T1).

8. Système de convertisseur selon au moins une des revendications précédentes,
**caractérisé en ce que**
la commande (3) du commutateur de puissance électronique (T1) est reliée à un moyen (2) de détection de tension de la tension de circuit intermédiaire.

9. Système de convertisseur selon au moins une des revendications précédentes,
**caractérisé en ce que**
le module tampon (PM) comprend un condensateur dont la capacité est supérieure à la somme de tous les condensateurs directement reliés à la tension de circuit intermédiaire.

10. Système de convertisseur selon au moins une des revendications précédentes,
**caractérisé en ce que**
la capacité du module d'alimentation (VM) directement reliée au circuit intermédiaire et un condensateur compris par le module tampon (PM) sont dimensionnés de telle sorte qu'en mode moteur à la charge nominale, la tension de circuit intermédiaire présenterait une composante de tension alternative moins de deux fois moins grande, si le condensateur du module tampon (PM) était directement connecté au circuit intermédiaire, que ne l'est la composante de tension alternative en l'absence de module tampon (PM), condensateur compris.

11. Système de convertisseur selon au moins une des revendications précédentes,
**caractérisé en ce que**
le module tampon (PM) comprend, en tant que dispositif connecté à une sortie (BRC) du module d'alimentation (VM), un condensateur dont le courant de charge peut être influencé et/ou commandé au moins par le commutateur de puissance électronique (T1).

12. Système de convertisseur selon au moins une des revendications précédentes,
**caractérisé en ce que**
le module tampon (PM) comprend au moins un condensateur électrolytique.

13. Système de convertisseur selon au moins une des revendications précédentes,
**caractérisé en ce que**
le module tampon (PM) comprend un condensateur (C2) dont la capacité est supérieure à la somme de tous les condensateurs directement reliés à la tension de circuit intermédiaire.

14. Système de convertisseur selon au moins une des revendications précédentes,
**caractérisé en ce que**
la capacité du module d'alimentation (VM) directement reliée au circuit intermédiaire et un condensateur compris par le module tampon (PM) sont dimensionnés de telle sorte qu'en mode moteur à la charge nominale, la tension de circuit intermédiaire présenterait une composante de tension alternative moins de deux fois moins grande, si le condensateur du module tampon était directement connecté au circuit intermédiaire, que ne l'est la composante de tension alternative en l'absence de module tampon, condensateur compris.

15. Système de convertisseur selon au moins une des revendications précédentes,
**caractérisé en ce que**
le module tampon (PM) et le module d'alimentation (VM) sont réalisés séparément de manière à présenter chacun leur propre boîtier.

16. Système de convertisseur selon au moins une des revendications 1 à 14,
**caractérisé en ce que**
le module tampon (PM) et le module d'alimentation (VM) sont intégrés dans un seul boîtier sous la forme d'un module d'alimentation tampon (PVM).

17. Système de convertisseur selon la revendication 16,
**caractérisé en ce que**
le module d'alimentation tampon (PVM) comprend un commutateur de puissance électronique (T1) qui laisse passer ou bloque le courant produit par la tension de circuit intermédiaire vers un dispositif en fonction de la commande (3) du commutateur de puissance électronique (T1).

18. Système de convertisseur selon la revendication 16 ou 17,
**caractérisé en ce que**
la commande (3) du commutateur de puissance électronique (T1) est reliée à un premier moyen (2) de détection de tension de la tension de circuit intermédiaire.

19. Système de convertisseur selon au moins une des revendications 16 à 18,
**caractérisé en ce que**
la commande (3) du commutateur de puissance électronique (T1) est reliée à un moyen (33) de détection du courant de circuit intermédiaire.

20. Système de convertisseur selon au moins une des revendications 16 à 19,
**caractérisé en ce que**
le dispositif, le module tampon (PVM), comprend un condensateur dont le courant de charge peut être influencé et/ou commandé au moins par le commutateur de puissance électronique (T1).

21. Système de convertisseur selon au moins une des revendications 16 à 20,
**caractérisé en ce que**
le module tampon (PVM) comprend au moins un condensateur électrolytique.

22. Système de convertisseur selon au moins une des revendications 16 à 21,
**caractérisé en ce que**
le module tampon (PVM) comprend un deuxième commutateur de puissance électronique (T2) et une commande (32) associée qui est reliée au moins à des deuxièmes moyens de détection de tension (23), l'amenée de courant à une résistance de freinage pouvant être influencée au moyen du deuxième commutateur de puissance électronique (T2).

23. Système de convertisseur selon au moins une des revendications 16 à 22,
**caractérisé en ce que**
le premier moyen de détection de tension (2) et le deuxième moyen de détection de tension (23) sont reliés au circuit intermédiaire par l'intermédiaire d'un diviseur de tension, la tension détectée par le deuxième moyen de détection de tension (23) étant abaissée par division par rapport à la tension détectée par le premier moyen de détection de tension (2).

24. Système de convertisseur selon au moins une des revendications 16 à 23,
**caractérisé en ce que**
la commande (3) associée au premier moyen de détection de tension (2) et la commande (32) associée au deuxième moyen de détection de tension (23) présentent les mêmes valeurs seuils de tension à leur entrée, en fonction desquelles les commutateurs de puissance électroniques (T1, T2) sont commandables.

25. Système de convertisseur selon au moins une des revendications précédentes,
**caractérisé en ce que**
les modules tels que modules tampons (PM), modules d'entraînement (AM), modules d'alimentation (VM) et, le cas échéant, d'autres modules, présentent chacun une interface pour la liaison électrique et mécanique avec le système de bus.

26. Système de convertisseur selon au moins une des revendications précédentes,
**caractérisé en ce que**
l'interface est réalisée de la même manière pour tous les modules.

27. Système de convertisseur selon au moins une des revendications précédentes,
**caractérisé en ce que**
le système de bus est réalisé sous la forme d'un système à barres dans lequel les modules sont enfichables.

28. Système de convertisseur selon au moins une des revendications précédentes,
**caractérisé en ce que**
les modules d'entraînement ne présentent pas de moyens de redressement.

29. Procédé pour faire fonctionner un module tampon dans un système de convertisseur comprenant
- au moins un module d'alimentation (VM) qui met à disposition une tension de circuit intermédiaire unipolaire,
- un ou plusieurs modules d'entraînement (AM) pouvant être alimentés par la tension de circuit intermédiaire et comprenant chacun au moins un onduleur destiné à alimenter au moins un moteur électrique,
- au moins un module tampon (PM) pour le stockage d'une énergie électrique, le module tampon (PM) présentant un condensateur (C2) qui n'est pas directement relié au circuit intermédiaire,
**caractérisé en ce que**
- la tension de circuit intermédiaire est détectée,
- en cas de dépassement d'une première valeur critique de la tension de circuit intermédiaire, le module tampon (PM) est mis en circuit par un commutateur de puissance si la puissance en mode générateur de premiers modules d'entraînement dépasse au total la puissance en mode moteur de deuxièmes modules d'entraînement,
- le module tampon renvoie de l'énergie aux modules alimentés par la tension de circuit intermédiaire si la puissance en mode moteur de modules d'entraînement dépasse au total la puissance en mode générateur.

30. Procédé selon la revendication 29,
**caractérisé en ce que**
en cas de dépassement d'une deuxième valeur critique de la tension de circuit intermédiaire, une résistance de freinage est alimentée en courant pour dissiper de l'énergie si la puissance en mode générateur de premiers modules d'entraînement dépasse au total la puissance en mode moteur de deuxièmes modules d'entraînement.

31. Procédé selon la revendication 29 ou 30,
**caractérisé en ce que**
les première et deuxième valeurs critiques sont identiques.
